# EUROPEAN PATENT SPECIFICATION

(11) **EP 1 654 096 B1**
(45) Date of publication and mention of the grant of the patent: **19.11.2014**
(21) Application number: 04774290.3
(22) Date of filing: 10.08.2004
(51) Int. Cl.: B23D 61/18, B28D 1/12, B24D 5/12

(54) **DIAMOND TOOL**
DIAMANTWERKZEUG
OUTIL DIAMANTE

(30) Priority: 11.08.2003 KR 2003055532
(43) Date of publication of application: 10.05.2006
(73) Proprietor: EHWA DIAMOND IND. CO., LTD., Kyongki-Do 447-060 (KR); General Tool, Inc., Irvine, California 92606 (US)
(72) Inventor: KIM, Soo-Kwang, Portfino, CA 92612 (US); KIM, Jong-Ho, Seoul 156-090 (KR); PARK, Hee-Dong, Suwon, Kyungki-do 442-470 (KR)
(74) Representative: Potter Clarkson LLP
(86) International application number: PCT/KR2004/002004
(87) International publication number: WO 2005/014243

(56) References cited:
- EP-A1- 1 297 928
- JP-A- 07 266 239
- KR-B1- 100 231 361
- KR-B1- 100 337 655

## Description

### Technical Field

The present invention relates to a diamond tool according to the preamble of claim 1 for cutting or perforating brittle workpieces, such as stone, brick, concrete and asphalt, and more particularly to a diamond tool designed to increase a cutting rate and reduce fine debris generated in a cutting operation. Such a diamond tool is known from EP 1 297 928 A1.

### Background Art

Synthetic diamond (referred to as 'diamond' hereinafter) was invented in the 1950's, and is known to have the highest hardness of any material on earth. Due to this property, diamond is used for cutting tools, grinding tools, and the like.

Particularly, diamond has been widely used in the field of stone machining when cutting or grinding a variety of stones, such as marble, granite and the like, and in the field of construction when cutting or grinding concrete structures.

Typically, a diamond tool comprises segments with diamond particles distributed therein, and a steel core with the segments fixed thereto.

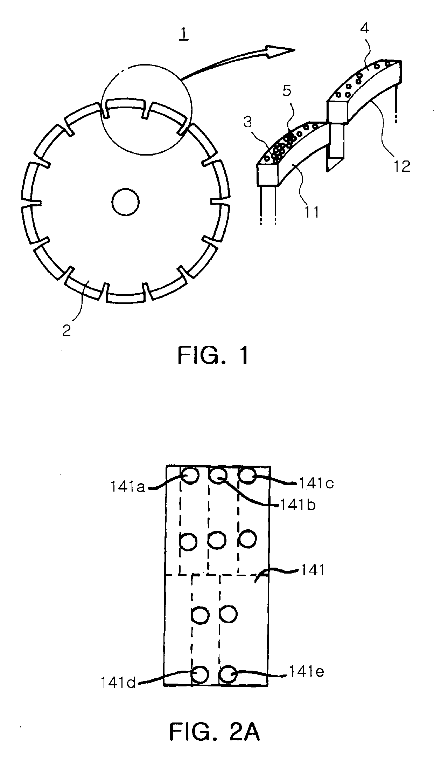

Fig. 1 shows an example of a segment type diamond tool.

As shown in Fig. 1, the segment type diamond tool comprises a plurality of segments 11 and 12 regularly fixed along the outer edge of a disk-shaped core 2 and having diamond particles 5 randomly distributed in each of the segments 11 and 12.

When cutting a workpiece using such a diamond tool, the diamond particles distributed in each of the segments perform the cutting operation.

With regard to this, according to research and experiment conducted by the inventors of the present invention, it has been noted that the cutting rate of the diamond tool is reduced when the diamond particles are randomly distributed on the segments as shown in Fig. 1.

This is attributed to the fact that the diamond tool including the segments with the diamond particles randomly distributed thereon is inefficient as described below. First, since the lands between cutting grooves formed on the workpiece by the diamond particles of a leading segment is much larger in width than a size of the diamond particle, even after the diamond particles of a trailing segment pass along the lands formed on the workpiece, the lands between the cutting grooves is not completely removed. Second, the diamond particles distributed on the trailing segment form the cutting grooves along the cutting grooves previously formed on the workpiece by the leading segment, so that the diamond particles on the trailing segment do not perform any work.

Meanwhile, as for a method of manufacturing the segment with the diamond particles randomly distributed thereon, powder metallurgy, in which the diamond particles are mixed with other metal powders prior to a sintering process, has been widely used.

When producing segments by means of the conventional powder metallurgy, differences in sizes and specific gravities between the particles cause segregation of the diamond particles during a process of mixing, forming, and sintering fine diamond particles and the other metal powders, thereby generating non-uniform distribution of the diamond particles among the metal powders. As a result, as shown in Fig. 1, a cutting surface 3 in each segment with an excessively large amount of diamond particles distributed thereon or a cutting surface 4 with an excessively small amount of diamond particles distributed thereon can be formed.

When the diamond particles are segregated as described above, not only is the cutting rate of the cutting tool deteriorated, but the life span of the cutting tool is also reduced.

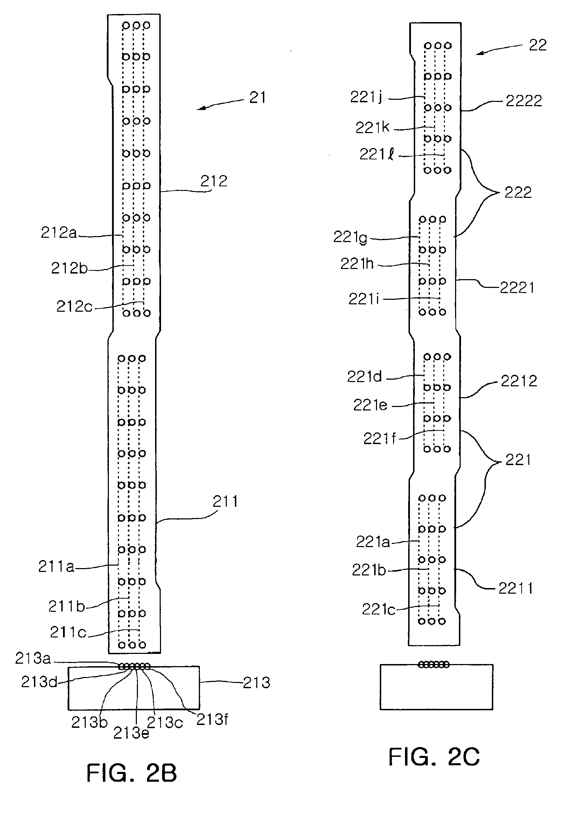

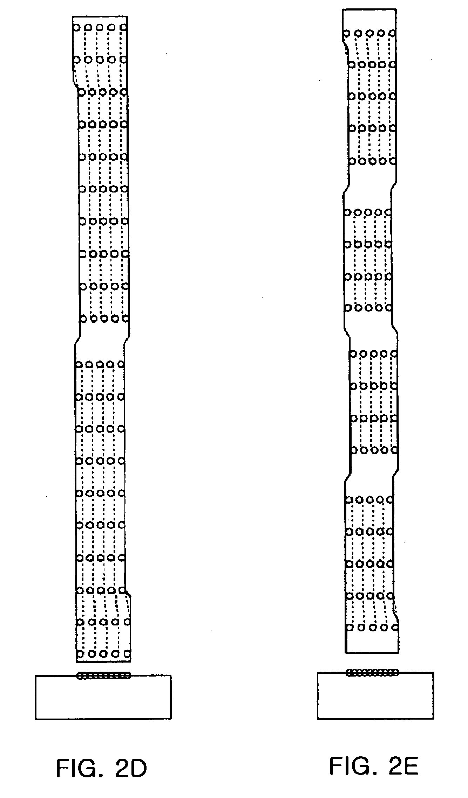

As a technology for solving the above problems of the prior art, a patterning technology to distribute the diamond particles in a predetermined pattern is suggested ard an example thereof is illustrated in Fig. 2.

EP 1 297 928 A1 discloses a diamond tool as per the preamble of claim 1.

The inventors of the present invention have conducted research and experiment to solve the problems of the prior art as described above, and, based on the results thereof, invented a diamond tool, which has diamond particles appropriately distributed on the segment of the diamond tool, thereby providing an excellent cutting rate and reducing fine debris generated in a cutting operation.

### Disclosure

The present invention has been made to solve the above problems, and it is an object of the present invention to provide a diamond tool, which has diamond particles appropriately distributed on each of segments of the diamond tool, thereby providing an excellent cutting rate and reducing fine debris generated during a cutting operation.

In accordance with the invention, there is provided a diamond tool, comprising a plurality of segments, each of the segments having a single plate-shaped layer or a plurality of plate-shaped layers of diamond particles arranged thereon, and the layers of diamond particles being arranged on the segment such that cutting grooves formed on a work piece by trailing layers of diamond particles are arranged between cutting grooves formed thereon by leading layers of diamond particles, respectively, during a cutting operation on the workpiece, and wherein the diamond particles are arranged at a predetermined tilt angle to a line connecting upper vertices or a line connecting lower vertices of a cross section, cut parallel in a cutting direction and perpendicular to a cutting surface, so that the diamond particles are protruded and uniformly spaced from each other on the cutting surface of the segment during the cutting operation on the workpiece, characterised in that each of the segments is divided into two or more sections such that n layers of diamond particles are arranged on a leading section in a cutting direction, and n' layers of diamond particles are arranged on a trailing section in the cutting direction (where n' ≤ n), and wherein the layers of diamond particles on the leading section are arranged between the layers of diamond particles on the trailing section, respectively, in the cutting direction, and in that the layers of diamond particles on the leading section are arranged between the layers of diamond particles on the trailing section, respectively, by forming depressed portions to both sides of the segment in the cutting direction.

### Description of Drawings

The above and other objects, features and other advantages of the present invention will be more clearly understood from the following detailed description taken in conjunction with the accompanying drawings:
Fig. 1 is an exemplary view illustrating a conventional diamond tool having diamond particles randomly distributed on a cutting surface of a segment;
Fig. 2a shows a segment divided into two sections.
Figs. 2b to 2e are exemplary views illustrating a segment with depressed portions formed thereon in a diamond tool according to the present invention;
Fig. 3 is an exemplary view illustrating a diamond tool
Fig. 4 is a schematic perspective view illustrating a segment of the diamond tool of Fig. 3, which has three layers of diamond particles regularly distributed on the segment;
Fig. 5 is a schematic perspective view illustrating the segment of the diamond tool of Fig. 3, which has two layers of diamond particles regularly distributed on the segment;
Fig. 6 is a schematic cross sectional view illustrating the cutting mechanism of a cutting operation on a workpiece using the diamond tool of Fig. 3;
Fig. 7 is another exemplary view illustrating the diamond tool;
Fig. 8 is yet another exemplary view illustrating the diamond tool;
Figs. 9a to 9c are schematic representations illustrating examples of an arrangement of the diamond particles in a plane, cut in perpendicular to a cutting surface of the segment of the diamond tool, in which Fig. 9a shows an example of the arrangement having the diamond particles of a square unit structure, Fig. 9b shows an example of the arrangement of the diamond particles having an equilateral triangle unit structure, and Fig. 9c shows an example of the arrangement of the diamond particles having an isosceles triangle unit structure;
Fig. 10 is a schematic representation illustrating an example of the segment for the diamond tool with the arrangement of the diamond particles of the square unit structure of Fig. 9a;
Fig. 11 is a diagram illustrating an example of the arrangement of the diamond particles in a cross section, cut in perpendicular to the cutting surface of the segment for the diamond tool of the present invention;
Figs. 12a to 12f are schematic representations illustrating examples of the segment with the arrangement of the diamond particles of the square unit structure, whereby in figures 12b to 12f the arrangement of the diamond particles is tilted;
Fig. 13 is an exemplary view illustrating the cutting surface of the segment, in a state wherein the diamond particles arranged on the cutting surface of the segment for the diamond tool are exposed on the cutting surface in a cutting operation;
Figs. 14a to 14d are schematic representations illustrating a symmetrical relationship of the diamond particle arrangement of the square unit structure having a tilt angle of 5° and of 25°, respectively;
Figs. 15a to 15f are schematic representations illustrating examples of the segment with the arrangement of the diamond particles of the equilateral triangle unit structure, in which the arrangement of the diamond particles is tilted;
Figs. 16a to 16f are schematic representations illustrating examples of the segment with the arrangement of the diamond particles of the isosceles triangle unit structure, in which the arrangement of the diamond particles is tilted;
Fig. 17 is a schematic representation illustrating the segment in a state wherein the diamond particles are densely arranged on the cutting surface at an end of the segment due to a low tilt angle when the diamond particles are arranged in a line;
Fig. 18 is a schematic view illustrating a portion of the diamond tool with one segment and a steel core coupled thereto;
Fig. 19 is a schematic representation illustrating the segment with the diamond particles arranged at a tilt angle of a and b;
Fig. 20 is a schematic view illustrating another example of the segment for the diamond tool;
Fig. 21 is a schematic view illustrating another example of the segment for the diamond tool;
Fig. 22 is a schematic view illustrating yet another example of the segment for the diamond tool; and
Fig. 23 is a graphical representation comparing variation of cutting time depending on the number of cutting cycles of a conventional example and of an inventive example.

### Mode for Invention

Now, preferred embodiments of the present invention will be described in detail with reference to the accompanying drawings.

The present invention relates to a segment-type diamond tool, which has diamond particles appropriately arranged on a cutting surface adpining a workpiece during a cutting operation, thereby enabling every diamond particle to be used most effectively.

As shown in Fig. 1, when cutting the workpiece using the diamond tool with the diamond particles randomly distributed on each of segments of the diamond tool, the diamond tool forms three types of cutting grooves on the workpiece as described below. First, there is a case where the diamond particles on a leading segment are followed by diamond particles on a trailing segment along an identical trace, so that no cutting groove is formed on the workpiece, whereby the diamond particles do not perform any work. Second, there is a case where the cutting grooves formed by the trailing segment are formed adjacent to the cutting grooves previously formed by the leading segment. Third, there is a case where, since a land between the cutting grooves formed by the leading segment is remarkably large in width, even after the diamond particles of the trailing segment pass along the land formed on the workpiece by the diamond particles of the leading segment, the land between the cutting grooves formed on the workpiece by the leading segment is not completely removed.

The diamond tool according to the present invention is designed to arrange the diamond particles such that reduction in cutting rate frequently occurred in the first and third cases may be minimized, and such that the second case may become a primary cutting operation, thereby maximizing the cutting rate.

That is, the diamond tool according to the present invention employs what is called 'scooping effect', which may be achieved by arranging the diamond particles such that the diamond particles of the trailing segment form the cutting grooves nearest to the cutting grooves previously formed by diamond particles of the leading segment, respectively.

Arrangement of the diamond particles in each of the segments of the diamond tool according to the present invention contributes to a highly effective cutting operation, thereby enhancing a cutting rate. Furthermore, the arrangement of the diamond particles in each of the segments cuts the workpiece into large particles, reducing fine debris generated during the cutting operation, thereby protecting an operator.

Preferred embodiments of a diamond tool having the arrangement of the diamond particles on the segment according to the present invention will be described in detail.

The present invention is applied to a diamond tool comprising a plurality of segments, each of which has a single or a plurality of plate-shaped layers of diamond particles, in which the diamond particles are arranged on the segment such that cutting grooves formed on a workpiece by a trailing layer of diamond particles are formed between cutting grooves formed thereon by a leading layer of diamond particles during a cutting operation on the workpiece.

The diamond tool comprises the segments with the diamond particles distributed thereon for directly performing the cutting operation, and a steel core with the segments fixed thereto.

In each of the segments, the diamond particles are arranged in the single layer or the plurality of layers parallel to the side surface of the steel core such that the diamond particles form one or more diamond lines on the cutting surface of the segment fixed to the steel core.

The diamond tool according to the present invention have segments, which consist of a leading segment with n layers of diamond particles arranged thereon, and a trailing segment with n' layers of diamond particles (where n' ≤ n) arranged therein. Here, the leading segment and the trailing segment are alternately arranged such that the layers of diamond particles of the trailing segment are arranged between the layers of diamond particles of the leading segment in the cutting direction. Furthermore, the leading segments and the trailing segments are alternately arranged such that the diamond particles on the trailing segment pass along the lands between grooves previously formed on the workpiece by the diamond particles on the leading segment, thereby completely removing the lands from the workpiece.

The present invention is applied to the diamond tool having segments, each of which is divided into two or more sections with n layers of diamond particles arranged on a leading section in the cutting direction, and with n' layers of diamond particles arranged on a trailing section in the cutting direction (where n' ≤ n), such that the layers of diamond particles of the leading section are arranged between the layers of diamond particles of the trailing section in the cutting direction, respectively.

In this case, the layers of diamond particles are alternately arranged at a predetermined space, by alternately forming depressed portions to a predetermined depth at both sides of the segment with the n layers of diamond particles arranged thereon.

In the segments formed with the depressed portions, the layers of diamond particles on the trailing section must be arranged between the layers of diamond particles on the leading section in the cutting direction.

Figs. 2a to 2e show examples of the segment divided into two or more sections.

Specifically, Fig. 2a shows a segment divided into two sections with three layers of diamond particles arranged on the leading section in the cutting direction, and with two layers of diamond particles arranged on the trailing section.

As shown in Fig. 2a, the layers of diamond particles 141d and 141e of the trailing section are arranged between the layers of diamond particles 141a, 141b and 141c of the leading section in the cutting direction.

Fig. 2b shows a segment 21 having a leading section 211 and a trailing section 212, on which the depressed portions are alternately formed at both sides of the front or trailing section in the cutting direction.

As shown in Fig. 2b, the segment 21 has the leading section 211 with three layers 211a, 211b and 211c of diamond particles arranged thereon, and the trailing section 212 with three layers 212a, 212b and 212c of diamond particles arranged thereon, such that the three layers 211a, 211b and 211c of diamond particles on the leading section 211 are arranged between the three layers 212a, 212b and 212c of the diamond particles on the trailing section 212, respectively, in the cutting direction.

Fig. 2c show a segment 22 having two or more (a plurality of) sub-sections with the depressed portions alternatively formed at both sides (at the side in the cutting direction) of the segment, such that the depressed portions may be repetitiously formed on the segment, so that the layers of diamond particles may be alternatively arranged therein.

As shown in Fig. 2c, the segment 21 has the leading section 221, which is comprised of a leading sub-section 2211 with three layers 221a, 221b and 221c of diamond particles arranged thereon and a trailing sub-section 2212 with three layers 221d, 221e and 221f of diamond particles arranged thereon, and the trailing section 222, which is comprised of a leading sub-section 2221 with three layers 221g, 221h and 221i of diamond particles arranged thereon and a trailing sub-section 2222 with three layers 221j 221k and 2211 of diamond particles arranged thereon. Here, the three layers 221a, 221b and 221c of diamond particles may be arranged between the three layers 221d, 221e and 221f of the diamond particles, respectively, in the cutting direction, while the three layers 221g, 221h and 221i of diamond particles may be arranged between the three layers 211j, 211k and 2111 of diamond particles, respectively, in the cutting direction.

Figs. 2d and 2e show examples of the segment with the diamond particles arranged to adjoin lateral sides of the segment.

A depth of the portion formed with the depressed portions, a length of the portion formed with the depressed portions, and the number of depressed portions may be appropriately varied according to size of the segment, concentration of the diamond parti cles, and size of the diamond particles.

Furthermore, the diamond tool according to the present invention may be alternately disposed with segments having the n layers of diamond particles arranged thereon, and with other segments having n-1 layers of diamond particles arranged thereon.

The layers of diamond particles in each of the segments with the n-1 layers of diamond particles arranged thereon are arranged between the layers of diamond particles in each of the segments with the n layers of diamond particles in the cutting direction, respectively.

The diamond particles are arranged at a predetermined tilt angle to a line connecting upper vertices or a line connecting lower vertices of a cross section, cut parallel in the cutting direction and perpendicular to the cutting surface, such that when cutting the workpiece with the diamond particles, the diamond particles are protruded and uniformly spaced from each other on the cutting surface of the segment.

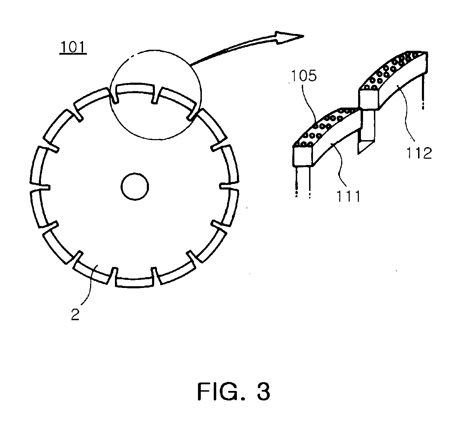

An example of the diamond tool (saw blade) having segment type segments, which can be applied to the invention, is shown in Fig. 3.

As shown in Fig. 3, a diamond tool 101 comprises a disk-shaped core 2, and a plurality of segments 111 and 112 fixed to the core 2, in which one of the segments 111 has three layers of diamond particles arranged thereon, and the other segment 112 has two layers of diamond particles arranged thereon.

Here, the diamond particles 105 are arranged such that two layers of diamond particles are arranged between the three layers of diamond particles in the cutting direction, respectively.

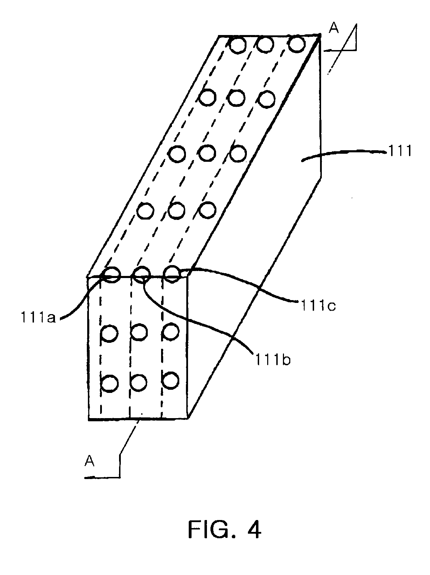

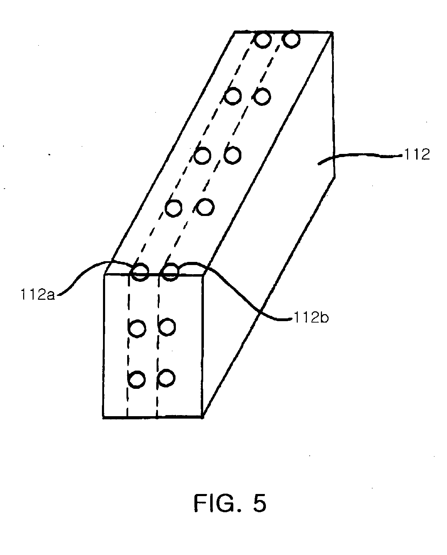

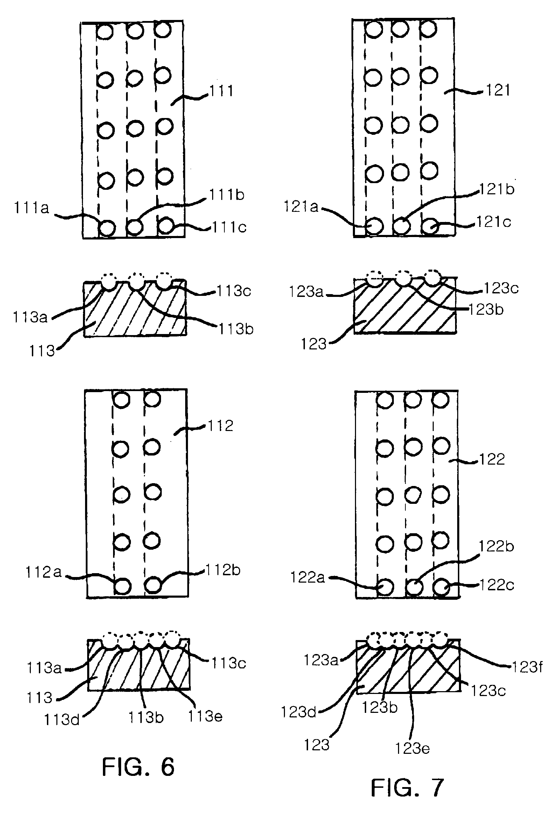

Figs. 4 and 5 show examples of one of the segments 111 with three layers of diamond particles arranged thereon, and one of the segments 112 with two layers of diamond particles arranged thereon, respectively. Fig. 6 shows the cutting mechanism when cutting the workpiece with the diamond tool according to the present invention of Fig. 2.

Furthermore, as an example of the diamond tool, to which the present invention may be applied, the diamond tool, shown in Fig. 7, is disposed with the segments, each of which has the n layers of diamond particles arranged thereon, such that the diamond particle layers of the segment are arranged between the diamond particle layers of adjacent segments in the cutting direction.

As shown in Fig. 7, a leading segment 121 is arranged with three layers of diamond particles 121a, 121b and 121c, and a trailing segment 122 is arranged with three layers of diamond particles 122a, 122b and 122c, wherein the three layers of diamond particles 121a, 121b and 121c are arranged between the three layers of diamond particles 122a, 122b and 122c, respectively, in the cutting direction.

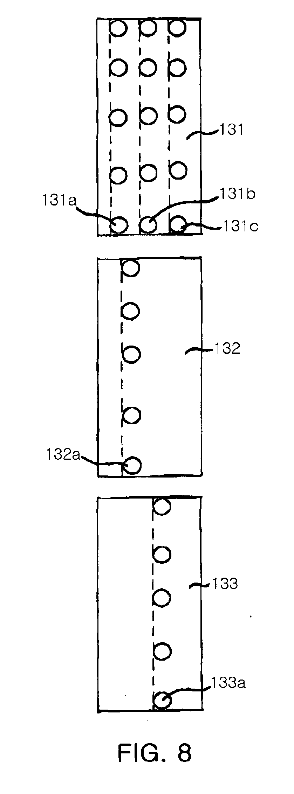

Moreover, as another example of the present invention shown in Fig. 8, there is a diamond tool in which two or more segments, each of which is arranged with n layers of diamond particles, and two or more other segments, each of which is arranged with n-2 or less layers of diamond particles, are alternately arranged, such that the n-2 or less layers of diamond particles on the segment may be arranged between the n layers of diamond particles on the segment in the cutting direction, respectively.

As shown in Fig. 8, each of two segments 132 and 133 is provided with one layer of the diamond particles, such that layers of diamond particles 132a and 133a are arranged between three layers of diamond particles 131a, 131b and 131c of the segment 131, respectively, in the cutting direction.

In order to maximize the scooping effect of the diamond tool with the diamond particles arranged thereon as described above, the diamond particles are arranged at a predetermined tilt angle to the line connecting the upper vertices or the lower vertices of the layer, cut parallel in the cutting direction and perpendicular to the cutting surface, such that when cutting the workpiece, the diamond particles may be protruded and uniformed spaced a predetermined distance from each other on the cutting surface of the segment, which will be described in detail as follows.

As for a method of manufacturing the diamond tool according to the present invention, there is powder metallurgy, in which the diamond particles are mixed with other metal powders prior to a sintering process.

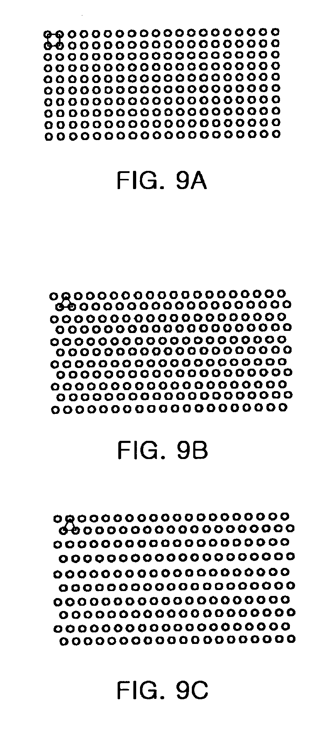

When manufacturing the segments using the powder metallurgy, the diamond particles are arranged in a plate shape in each of the segments. Examples of arrangement of the diamond particles are shown in Figs. 9a to 9c.

As shown in Figs. 9a to 9c, the diamond particles may be arranged in a square unit structure (Fig. 9a), in an equilateral triangle unit structure (Fig. 9b), or in an isosceles triangle unit structure (Fig. 9c).

Of course, the unit structure of arranging the diamond particles are not limited to the shapes as mentioned above.

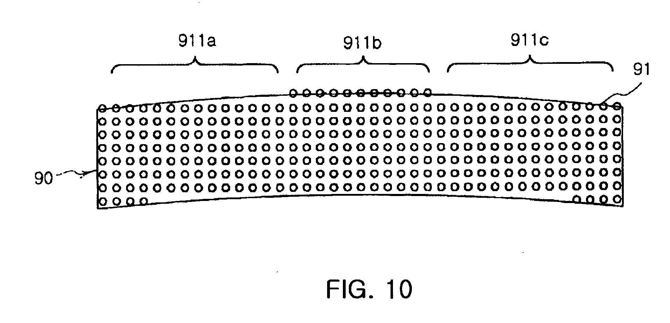

In a case where the diamond particles are arranged in the square unit structure as shown in Fig. 9a, the diamond particles in each of the segments may be arranged as shown in Fig. 10.

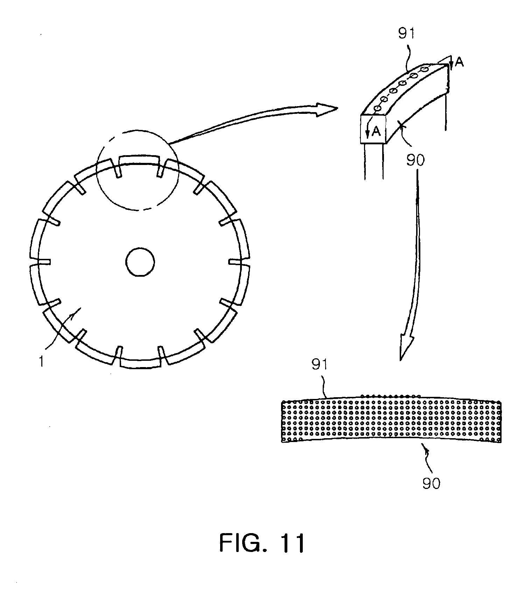

That is, the arrangement shown in Fig. 10 can be obtained on the segment taken along line A-A of Fig. 11.

'cross section, cut parallel in the cutting direction and perpendicular to the cutting surface' used here means a cross section of the segment taken along the line A-A as shown in Fig. 11.

In Fig. 11, a reference numeral 91 denotes a cutting surface.

In Fig. 10, when viewing a state of the diamond particles on the cutting surface 91 of a segment 90, which performs the cutting operation, initially, diamond particles 911b at the center of the cutting surface 91 perform the cutting operation. However, as the diamond particles continues to perform the cutting operation, the diamond particles 911b at the center of the cutting surface 91 are removed therefrom, and then diamond particles 911a and 911c at either side of the segment 90 perform the cutting operation.

During the cutting operation, the above mentioned phenomenon is continuously repeated, and thus, without being uniformly protruded on the overall cutting surface of the segment, the diamond particles are centralized on a portion of the cutting surface thereof, thereby preventing the scooping effect of the diamond tool from being realized 100%.

Accordingly, when arranging the diamond particles, it is effective to arrange the diamond particles at a predetermined tilt angle.

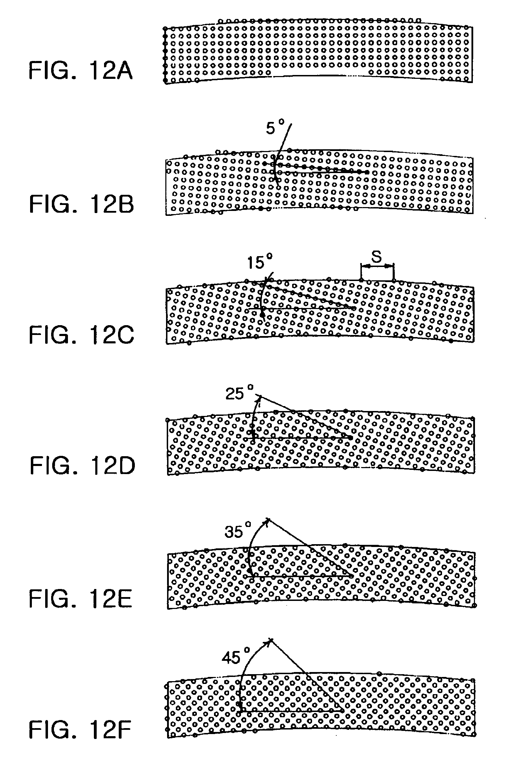

Figs. 12a to 12f schematically show the arrangement of the diamond particles according to the tilt angle in the square unit structure.

As shown in Figs. 12a to 12f, it can be appreciated that the arrangement shown in Figs. 12b to 12f maintains more appropriate spacing between the diamond particles on the cutting surface than that of the arrangement shown in Fig. 12a.

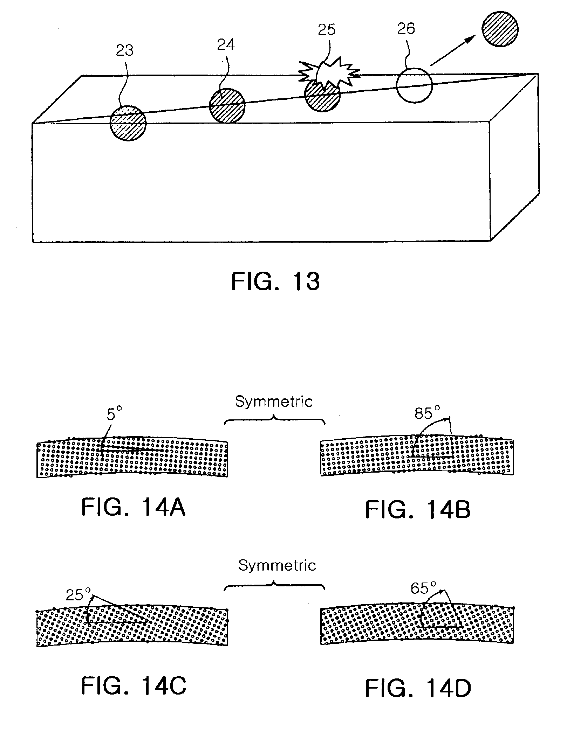

In general, as shown in Fig. 13, in case of a diamond saw blade, the diamond particles on the cutting surface thereof during the cutting operation have various shapes, such as an emerging crystal 23, a whole crystal 24, a fractured crystal 25, a pull-out hole 26, and the like.

Reports related to the diamond tool say that, in the case where a ratio of the whole crystal: the fractured crystal: the pull-out hole is 4:4:2, the cutting operation of the diamond tool is most effective.

Accordingly, it can be appreciated that the diamond particles are arranged at a predetermined tilt angle, and more preferably at a tilt angle of 5 ° or more in the segment allows the whole crystal, the fractured crystal, and the pull-out hole to have an appropriate combination, thereby enabling a more effective cutting operation.

In the arrangement of the diamond particles having the square unit structure as shown in Fig. 12f, the diamond particles are symmetrically arranged at a tilt angle of 45°.

That is, the arrangement of the diamond particles shown in Fig. 14a is symmetrical to that shown in Fig. 14b, and the arrangement of the diamond particles shown in Fig. 14c is symmetrical to that shown in Fig. 14d.

As shown in Figs. 9b and 9c, in a case where the arrangement of the diamond particles has the equilateral triangle unit structure and the isosceles triangle unit structure, respectively, the diamond particles are symmetrically arranged at a tilt angle of 30° and of 90°.

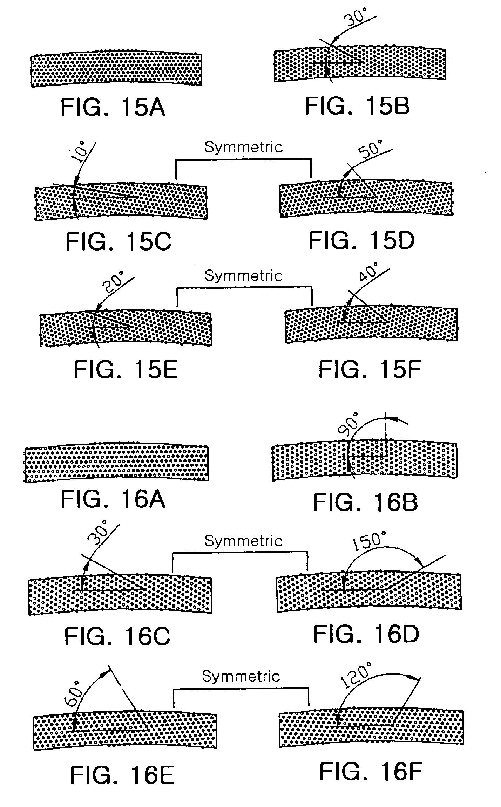

Figs. 15 and 16 show the arrangement of the diamond particles and symmetrical relations thereof according to the tilt angle in the equilateral triangle unit structure and the isosceles triangle unit structure, respectively.

As described above in Fig. 10, if the diamond particles are narrowly spaced therebetween and have the same protrusion height, a region having a narrow distance between the diamond particles is partially provided during the cutting operation, so that the scooping effect cannot be realized 100 %, thereby making it difficult to have an excellent cutting rate.

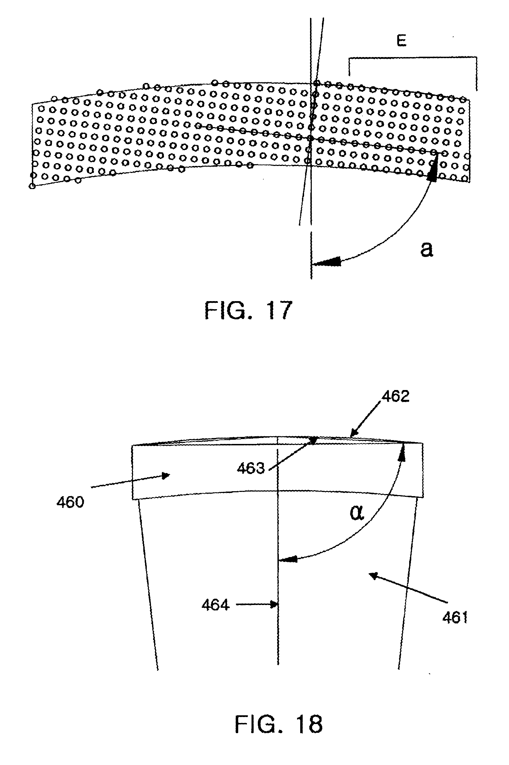

Since the cutting surface of each of the segment used in practice has a finite radius, when the diamond particles are arranged in a line, a distal end of the segment can be densely arranged with the diamond particles on the cutting surface at some tilt angles of the arrangement, as is seen in a portion E of Fig. 17.

In Fig. 18, a portion of the diamond tool with one segment attached to the steel core is shown.

In Fig. 18, an angle α is defined between a line 463, which connects the center of a cutting surface 462 and end points at both sides of a segment 460 on the cutting surface 462 of the segment 460, and a line 464 from the center of the cutting surface 462 to the center of the steel core 461.

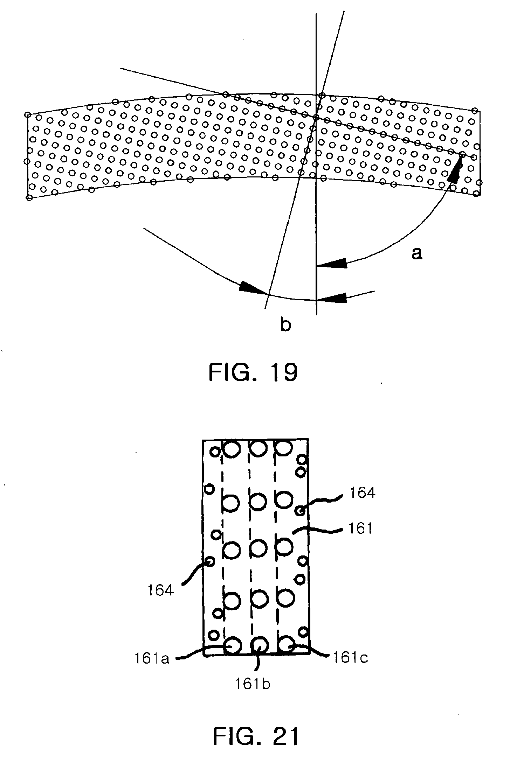

Since the diamond particles substantially performing the cutting operation are on the cutting surface 462, it is desirable that the angle α not be the same as an angle a or b defined as in Fig. 19.

That is, since the angle α can be varied depending on an outer diameter of the steel core 461, a length of the segment 460, and the like, it is desirable that, when arranging the diamond particles, the tilt angle be set in the range that the angle α is not the same as the angle a or b.

Fig. 17 illustrates a case where the angle α is the same as the angle a or b, and in which case, as shown in Fig. 17, a distance between the diamond particles on the cutting surface becomes narrow, so that the diamond particles are protruded only in the portion E, thereby preventing the scooping effect from being realized 100 %.

As such, in order to enhance the scooping effect, it is necessary that the diamond particles are arranged at a predetermined tilt angle to the line connecting the upper vertices of the cross section or the line connecting the lower vertices on the cross section, cut parallel in the cutting direction and perpendicular to the cutting surface, and in other words, that the diamond particles are arranged such that the angle α defined in Fig. 18 is not the same as the angle a or b defined as in Fig. 19.

When the diamond particles are arranged as described above, the diamond particles are always exposed, and regularly spaced a predetermined distance from each other on the cutting surface during the cutting operation on the workpiece, so that the scooping effect may be more enhanced, leading to enhancement of the cutting rate.

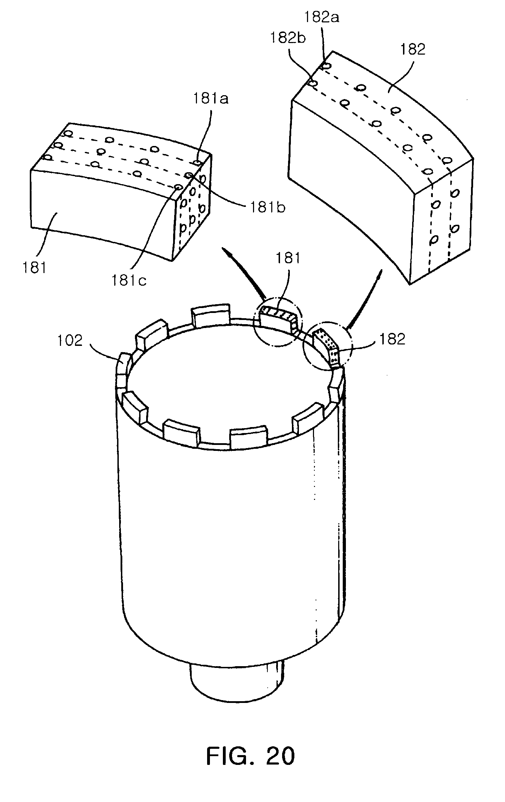

Furthermore, the present invention can be applied to core segments of core bits comprising a plurality of segments as shown in fig. 20.

Fig. 20 shows an example of core segments. As shown in Fig. 20, the core segments 102 consist of segments 181 and other segments 182, which are alternately arranged. Here, each of the segments 181 is arranged with three layers of diamond particles 181a, 181b and 181c on a cutting surface, and each of the segments 182 is arranged with two layers of diamond particles 182a and 182b on the cutting surface. Additionally, in the layers of diamond particles, the diamond particles are arranged at a predetermined tilt angle to the line connecting the upper vertices of the cross section or the line connecting the lower vertices on the cross section cut parallel perpendicular to the cutting surface.

Furthermore, the present invention may be applied to the diamond tool, which disposes one or more segments with the diamond particles randomly distributed therein between the segments with the single or the plurality of layers of diamond particles arranged thereon.

For instance, there are an alternate arrangement of triple-layered segment x double-layered segment x randomly distributed segment, an alternate arrangement of triple-layered segment x randomly distributed segment x double-layered segment, an alternate arrangement of triple-layered segment x randomly distributed segment x randomly distributed segment, and an alternate arrangement of triple-layered segment x double-layered segment x randomly distributed segment x randomly distributed segment.

Although the diamond tool having the segments with the diamond particles randomly distributed therein as described above has superior cutting efficiency to the conventional diamond tool, it has a more or less reduced cutting rate, compared with the diamond tool which does not have the segments with the diamond particles randomly distributed therein.

In the diamond tool according to the present invention, it is desirable that the distance between the layers of diamond particles arranged in the leading segment be less than or equal to a thickness of the layer of the diamond particles (that is, a width between the lines of the diamond particles) arranged in the trailing segment.

Meanwhile, when manufacturing the segments with the diamond particles arranged thereon according to the present invention, particularly, when manufacturing the segments with the diamond particles regularly arranged inside the segment (Figs. 2a, 2b and 2c), since the segment does not have the diamond particles on outer surfaces of both lateral sides thereof, the metal powers will be worn out prematurely, and thus, the diamond particles regularly arranged on the segment may be removed prematurely.

Accordingly, in order to prevent the lateral sides of the segment from being worn out prematurely, the segment according to the present invention may have highly wear resistant fillers appropriately distributed at a portion of the lateral sides, where the diamond particles are not distributed.

That is in order to further increase life span of the diamond tool, it is desirable that the fillers (abrasive material having a high hardness) be added to the metal power, thereby increasing the wear resistance. The fillers applicable to the present invention are wear resistant particles, such as SiC, WC, BN, Al₂O₃, diamond particles, and the like, which may be provided as a single component or mixtures thereof.

Since the material for the fillers is added to the metal power in order to prevent the lateral sides of the segment from being worn out, when the diamond particles are used as the fillers, the diamond particles added as the fillers to the lateral sides must have a lower concentration than the diamond particles provided at the center of the segment for the cutting operation.

It is desirable that the diamond particles added as the fillers to the lateral sides have a concentration of 10 ~ 60 % of the concentration of the diamond particles provided at the center of the segment for the cutting operation.

This is attributed to the fact that when the diamond particles, added as the fillers to the lateral sides, have a concentration less than 10 % of the concentration of the diamond particles provided at the center of the segment for the cutting operation, an effect of preventing the lateral sides from being worn out prematurely cannot be achieved due to a premature abrasion at the lateral sides of the segment. Furthermore, when the diamond particles, added as the fillers to the lateral sides, have a concentration more than 60 % of the concentration of the diamond particles provided at the center of the segment for the cutting operation, not only is the effect of preventing the lateral sides from being worn out prematurely too large, but an amount of the diamond particles added to the center of the segment is also relatively lowered, thereby reducing the cutting rate.

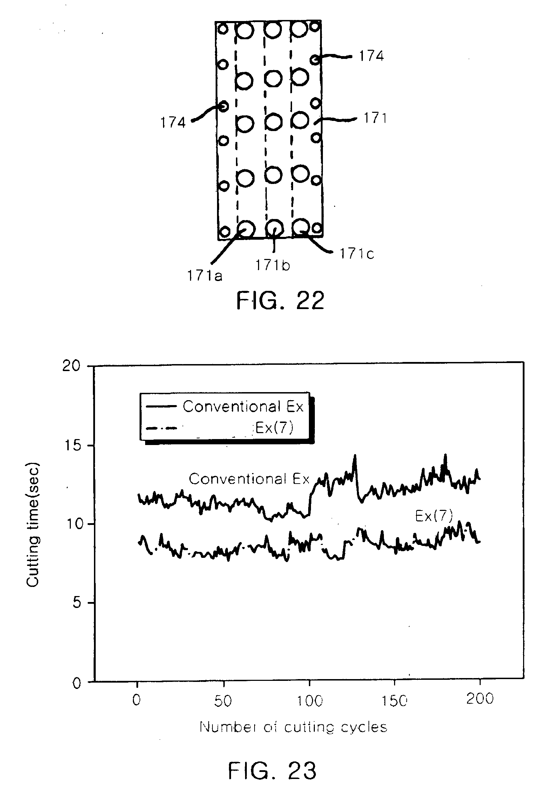

As shown in Fig. 21, fillers 164 may be randomly distributed at the lateral sides of a segment 161, and as shown in Fig. 22, fillers 174 may be regularly distributed at the lateral sides of a segment 171.

In Figs. 21 and 22, reference numerals 161a, 161b, 161c, 171a, 171b, and 171c denote the layers of diamond particles.

An example of manufacturing the diamond tool according to the present invention will now be described hereinafter.

Spray type abrasives are applied onto a metal net cut to the shape of a segment, and a metal jig with holes spaced a uniform distance from each other is placed on the abrasives. Then, fine diamond particles are distributed on the metal jig such that one diamond particle is located in one hole punctured in the metal jig. By separating the metal jig, the metal net with the diamond particles uniformly arranged thereon is achieved. This metal net is subjected to a cold forming along with metal power, and is then sintered, thereby producing the segment.

Here, when manufacturing one segment to be divided into two or more section, the diamond tool may be produced using upper and lower molds, each of which has protruded portions corresponding to the depressed portions on the sections, by forming or sintering, and in which case, the diamond tool may be produced more preferably by sintering. Sintering has been widely available in the field of diamond tools.

It should be understood that the method of manufacturing the diamond tool described above is disclosed as a preferred example, and that the present invention is not limited to the method.

A cutting mechanism for cutting the workpiece using a diamond tool will be described hereinafter.

As shown in Fig. 6, when cutting a workpiece 113 using a diamond tool continuously disposed with segments 111, each of which has three layers of diamond particles 111a, 111b and 111c arranged therein, and with segments 112, each of which has two layers of diamond particles 112a and 112b arranged therein, cutting grooves 113d and 113e formed on the workpiece 113 by each of the segments 112 with the two layers of diamond particles 112a and 112b arranged therein are arranged near to cutting grooves 113a, 113b and 113c formed on the workpiece 113 by each of the segments 111 with the three layers of diamond particles 113a, 113b and 113b, thereby enhancing the cutting rate of the diamond tool. Additionally, since the workpiece can be cut into a large size, the diamond tool of the invention can reduce the amount of fine debris generated during the cutting operation. Furthermore, the diamond particles are arranged such that the angle α defined in Fig. 18 is not the same as the angle a or b defined as in Fig. 19. As a result, the diamond particles are always exposed, and uniformly spaced the predetermined distance from each other on the cutting surface during the cutting operation of the workpiece, so that the scooping effect may be more enhanced, leading to the enhancement of the cutting rate.

Meanwhile, as shown in Fig. 7, after three layers of diamond particles 121a, 121b and 121c arranged in the cutting surface of the leading segment 121 form cutting gr ooves 123a, 123b and 123c on the workpiece 123, three layers of diamond particles 122a, 122b and 122c arranged in the cutting surface of the trailing segment 122 form cutting grooves 123d, 123e and 123f near to the cutting grooves 123a, 123b and 123c formed on the workpiece 123 by the leading segment 121, respectively, thereby most effectively cutting the workpiece and enhancing the cutting rate. Additionally, since the workpiece can be cut into the large particles by the diamond tool, the amount of fine debris generated during the cutting operation can be reduced. Furthermore, the diamond particles are arranged such that the angle α defined in Fig. 18 is not the same as the angle a or b defined as in Fig. 19. As a result, the diamond particles are always exposed, and uniformly spaced the predetermined distance from each other on the cutting surface during the cutting operation of the workpiece, so that the scooping effect may be more enhanced, resulting in enhancing the cutting rate.

The present invention will now be described in detail with reference to examples hereinafter.

**Example 1**

In order to compare cutting performances according to the tilt angles of the diamond particles arranged in a plate shape on a cross section, cut perpendicular to the cutting surface, cutting tests were carried out using a 14 inch-type saw blade with 24 segments disposed therein, the results of which are shown in Table 1 as follows.

The saw blade is alternately disposed with segments, each of which has three layers of diamond particles regularly arranged therein, and with segments, each of which has two layers of diamond particles regularly arranged therein, as shown in Fig. 5 (alternate arrangement of triple-layered type X double-layered type).

Here, each of the segments had dimensions of 40 mm diameter, 8.2 mm width and 3.2 mm thickness, and a Co-Fe-N based metal power was used in Example 1.

The diamond particles used in Example 1 were MBS 955 produced by GE in the U.S.A., and had a concentration of 0.9 cts/cc. Sintering was performed at a temperature of 860 °C for 5 minutes by hot pressing.

The segments manufactured as described above were fixed to a steel core having a length of 14 inches by laser welding, and the cutting tests were performed to a depth of 35 mm on a workpiece.

The saw blade used was a 5.5 HP, engine-driven cutting tester manufactured by EDCO Corporation.

The tilt angles of the diamond particles arranged on the segment were varied at 0°, 15°, 25°, 35°, and 45°.

In order to prevent the lateral sides of the segment from being worn out, the diamond particles, which are the same as the diamond particles uniformly arranged inside the segment, are used as fillers at the lateral sides, and added thereto with a concentration of about 30 % of the concentration of the diamond particles (for performing the cutting operation), which are the same as the diamond particles regularly arranged at the inner portion of segment for cutting operation.

**Table 1**

| Example Nb. | Diamond arragnement tilt angle | Concentration (cts/cc) | Cutting rate (cm²/mi n) | Cutting ratio(%) | Life span (m²/m m) | Life span ratio (%) |
|---|---|---|---|---|---|---|
| Comprative example 1 | 0° | 0.9 | 610.3 | 102 | 4.77 | 102 |
| example 1 | 15° | 0.9 | 670.1 | 112 | 4.91 | 105 |
| example 2 | 25° | 0.9 | 723.9 | 121 | 5.01 | 107 |
| example 3 | 35° | 0.9 | 700.0 | 117 | 5.38 | 115 |
| example 4 | 45° | 0.9 | 712.1 | 119 | 5.10 | 109 |
| Conventional example | Disorder | 0.9 | 598.3 | 100 | 4.68 | 100 |

As shown in Table 1, it can be appreciated that Inventive examples 1 to 4 according to the present invention have superior cutting performance and life span to Conventional example and Comparative example 1, and particularly, in cases of Inventive examples 2 to 4 having a tilt angle of 25 ~ 45°, have an excellent cutting performance.

### Example 2

As shown in Table 2 as follows, after manufacturing a saw blade alternatively disposed with segments, each of which has three layers of diamond particles regularly arranged therein, and with segments, each of which has two layers of diamond particles regularly arranged therein (alternate arrangement of 3 X 2) ( example 5), a saw blade alternatively disposed with segments, each of which has four layers of diamond particles regularly arranged therein, and with segments, each of which has three layers of diamond particles regularly arranged therein (alternate arrangement of 4 X 3) (example 6), a saw blade alternately disposed with segments, each of which has three layers of diamond particles regularly arranged therein and is alternately formed with depressed portions at both sides thereof (example 7), and a saw blade with segments disposed therein, each of which is randomly arranged with the diamond particles therein (Conventional example), cutting tests were performed for investigating the cutting performance and the life span of the saw blade, the results of which are shown in Table 2 as follows.

In the inventive examples, the tilt angles of the layers of diamond particles regularly arranged perpendicular to the cutting surface were fixed at 25° based on the results in Table 1.

Each of the layers of diamond particles in the segment had a thickness of 0.4 mm, the same as the average particle size of the diamond particles, and the layers of diamond particles were spaced a distance of 0.3 mm from each other.

The Co-Fe-Ni based alloy was used as the metal power, and the diamond particles in Example 2 were MBS 955 made by GE in the U.S.A. Sintering was performed at a temperature of 860 °C for 5 minutes by hot pressing.

The rest conditions for the experiment were the same as those of Example 1.

**Table 2**

| Example Nb. | Concentration(cts/cc) | Cutting rate(cm²/min) | Cutting ratio(%) | Life span(m²/mm) | Life span ratio(%) |
|---|---|---|---|---|---|
| example 5 | 0.9 | 713.4 | 122 | 5.72 | 114 |
| example 6 | 0.9 | 742.7 | 127 | 5.92 | 118 |
| example 7 | 0.9 | 766.1 | 131 | 5.87 | 117 |
| Conventional example | 0.9 | 584.8 | 100 | 5.02 | 100 |

As shown in Table 2, it can be appreciated that examples 5 to 7 have superior cutting performance and life span to Conventional example.

### Example 3

With the saw blade of example 7, and the saw blade of Conventional example in Example 2, cutting time according to the number of cutting cycles were investigated, results of which are shown in Fig. 23.

Here, term 'cutting time' means the time taken for the saw blade to cut a workpiece one time in the cutting operation. In cutting operation, 'cut one time' means that the workpiece having a length of 30 cm was cut one time to a predetermined depth.

As shown in Fig. 23, it can be appreciated that the saw blade of example 7 has low and stable cutting time, and a uniform performance, compared with the saw blade of Conventional example.

### Example 4

After manufacturing a saw blade alternatively disposed with segments, each of which has fillers added thereto, on the basis of the alternate arrangement of 3 X 2 in each of the segments in order to prevent lateral sides of the segments from being worn out prematurely, cutting tests were performed, the results of which are shown in Table 3 as follows.

Here, tilt angles of the layers of diamond particles regularly arranged perpendicular to the cutting surface were fixed at 25° based on the results in Table 1.

As for the fillers, the diamond particles, which are the same as the diamond particles regularly arranged at the center of the segment for the cutting operation, were used, and varied in a concentration of 5 ~ 70 % of the concentration of the diamond particles regularly arranged at the center of the segment for the cutting operation.

Premature abrasion of the lateral sides of the segment was evaluated by a reduction in thickness of the segment after the cutting operation.

The reduction in thickness of the segment was obtained by measuring an amount reduced below an original thickness of 3.2 mm of the segments after the cutting operation was performed to a length of 30 m and 60 m.

After measuring average values of the abrasion amounts of four segments spaced 90 ° from any one of 24 segments, the average values of the abrasion amounts of the lateral sides were compared. Other experimental conditions were the same as those of Example 1.

**Table 3**

| Example No. | Content of fillers at lateral sides | Reduction of in thickenss of segment | | Results of evaluation |
|---|---|---|---|---|
| | | After cutting 30m | After cutting 60m | |
| Comparative example 2 | 5 | 0.2 | 0.33 | Bad |
| example 8 | 10 | 0.07 | 0.10 | Good |
| example 9 | 30 | 0.04 | 0.06 | Good |
| example 10 | 40 | 0.04 | 0.05 | Good |
| example 11 | 50 | 0.03 | 0.04 | Good |
| example 12 | 60 | 0.03 | 0.02 | Good |
| Comparative example 3 | 70 | 0.02 | 0.02 | Bad cutting performance |

As is shown in Table. 3, it can be appreciated that in cases of the segments having an appropriate amount of fillers (examples 8 to 12), the reduction in thickness of the segment was very small.

In case of the comparative example 3, in spite of good abrasion property, the cutting performance was bad.

### Example 5

After manufacturing a saw blade alternatively disposed with segments, each of which has three layers of diamond particles regularly arranged therein, and with segments, each of which has two layers of diamond particles regularly arranged therein (alternate arrangement of 3 X 2) (example 5), a saw blade having the segments, each of which has the layers of diamond particles randomly distributed therein, among the segments in the saw blade of example 5, that is, the saw blade having the alternate arrangement of triple-layered segments, double-layered segments, and randomly distributed segments (alternate arrangement of 3 X 2 X random distribution X random distribution) (example 13), a saw blade having segments, each of which has the diamond particles randomly distributed therein (Conventional example), cutting tests were performed for investigating the cutting performance and the life span of the saw blade, the results of which are shown in Table 4 as follows.

In the examples, the tilt angles of the layers of diamond particles regularly arranged perpendicular to the cutting surface were fixed at 25°.

The Co-Fe-Ni based alloys were used as the metal power, and the diamond particles used in Example 5 were MBS 955 produced by GE in the U.S.A. Sintering was performed at a sintering temperature of 860 °C for 5 minutes by the hot press method.

The saw blade of Example 5 has 24 segments attached to a 14-inch core by laser welding, and the cutting tests were performed to a depth of 35 mm on a workpiece. The saw blade used was a 5.5 HP, engine-driven cutting tester manufactured by EDCO Corporation.

Each of the segments of the saw blade had dimensions of 40 mm diameter, 8.2 mm width and 3.2 mm thickness.

**Table 4**

| Example No. | Concentration (cts/cc) | Cutting rate(cm²/min) | Cutting Ratio(%) | Life span(m² /mm) | Life span ratio(%) |
|---|---|---|---|---|---|
| example 5 | 0.9 | 713.4 | 122 | 5.72 | 114 |
| example 13 | 0.9 | 643.3 | 110 | 5.17 | 103 |
| Conventional example | 0.9 | 584.8 | 100 | 5.02 | 100 |

As shown in Table 4, it can be appreciated that although example 13 has lower cutting performance than example 5, it has superior cutting performance and life span to Conventional example.

As is apparent from the above description, the diamond particles are arranged on the segments of the diamond tool such that the layers of diamond particles on the trailing segment form the cutting grooves near the cutting grooves formed by the layers of diamond grooves on the leading segment. Furthermore, the leading segments and the trailing segments are alternately arranged such that the diamond particles on the trailing segment pass along the lands between grooves previously formed on the workpiece by the diamond particles on the leading segment, thereby completely removing the lands from the workpiece. Accordingly, the respective diamond particles are maximally utilized in the cutting operation on the workpiece, thereby enhancing the cutting rate and reducing the amount of the fine debris during the cutting operation.

Furthermore, the single or the plurality of plate-shaped layers of diamond particles are arranged on the segments of the diamond tool, and the fillers are distributed on the segment at an appropriate positions thereof, so that the respective diamond particles are maximally utilized in the cutting operation on the workpiece, thereby enhancing the cutting rate, reducing the amount of the fine debris during the cutting operation, and extending the life span of the diamond tool.

Furthermore, the diamond particles are protruded, and uniformly spaced from each other during the cutting operation on the workpiece, maximizing the scooping effect, thereby enhancing the cutting rate, and reducing the amount of the fine debris in the cutting operation.

It should be understood that the embodiments and the accompanying drawings as described above have been described for illustrative purposes and the present invention is limited only by the following claims. Further, those skilled in the art will appreciate that various modifications, additions and substitutions are allowed without departing from the scope of the accompanying claims.

## Claims

1. A diamond tool, comprising a plurality of segments (21; 22; 111, 112; 121, 122, 131, 132, 133), each of the segments having a single plate-shaped layer or a plurality of plate-shaped layers of diamond particles arranged thereon, and the layers of diamond particles being arranged on the segment such that cutting grooves formed on a work piece by trailing layers of diamond particles are arranged between cutting grooves formed thereon by leading layers of diamond particles, respectively, during a cutting operation on the workpiece, and
wherein the diamond particles are arranged at a predetermined tilt angle to a line connecting upper vertices or a line connecting lower vertices of a cross section, cut parallel in a cutting direction and perpendicular to a cutting surface, so that the diamond particles are protruded and uniformly spaced from each other on the cutting surface of the segment during the cutting operation on the workpiece, wherein each of the segments is divided into two or more sections such that n layers of diamond particles (141a-c; 211a-c; 121a-c; 131a-c) are arranged on a leading section (211) in a cutting direction, and n' layers of diamond particles (141d, 141e; 212a-c; 122a-c, 132, 133a) are arranged on a trailing section (212) in the cutting direction (where n' ≤ n), and wherein the layers of diamond particles on the leading section are arranged between the layers of diamond particles on the trailing section (212), respectively, in the cutting direction,
**characterised in that**
the layers of diamond particles on the leading section (211) are arranged between the layers of diamond particles on the trailing section (212), respectively, by forming depressed portions to both sides of the segment in the cutting direction.

2. The diamond tool as set forth in Claim 1, wherein the tilt angle is in the range of 5 ~ 45°.

3. The diamond tool as set forth in Claim 2, wherein the tilt angle is in the range of 15 ~ 45°.

4. The diamond tool as set forth in any one of Claims 1 to 3, wherein the leading layers of diamond particles are spaced from each other by a distance less than or equal to a thickness of each trailing layer of diamond particles.

5. The diamond tool as set forth in any one of Claims 1 to 3, further comprising one or a plurality of segments, each having the diamond particles randomly distributed therein.

6. The diamond tool as set forth in any preceding claim, wherein each of the segments has fillers (164, 174) distributed therein at a portion where the layers of diamond particles are not formed.

7. The diamond tool as set forth in Claim 6, wherein the fillers are selected from the groups consisting of SiC, WC, BN, Al₂O₃, diamond particles, and mixtures thereof.

8. The diamond tool as set forth in Claim 7, wherein the fillers are the diamond particles, and the diamond particles added as the fillers to the segment have a concentration of 10 ~ 60 % of the concentration of the diamond particles for the cutting operation in the segment.

## Patentansprüche

1. Diamantwerkzeug, aufweisend eine Vielzahl an Segmenten (21, 22, 111, 112, 121, 122, 131, 132, 133), wobei jedes der Segmente eine einzige plattenförmige Schicht oder eine Vielzahl an plattenförmigen Schichten von darauf angeordneten Diamantpartikeln hat und wobei die Schichten von Diamantpartikeln auf dem Segment angeordnet sind, so dass während eines Schneidvorganges an einem Werkstück Schneidrillen auf dem Werkstück gebildet werden durch nachfolgende Schichten von Diamantpartikeln, die zwischen Schneidrillen angeordnet sind, die darauf gebildet werden durch führende Schichten von Diamantpartikeln, und
wobei die Diamantpartikel in einem vorbestimmten Neigungswinkel angeordnet sind zu einer Linie, die obere Ecken verbindet, oder zu einer Linie, die untere Ecken eines Querschnitts verbindet, der parallel zu einer Schneidrichtung und senkrecht zu einer Schneidoberfläche geschnitten ist, so dass während des Schneidvorganges an dem Werkstück die Diamantpartikel hervorstehen und gleichmäßig voneinander beabstandet sind auf der Schneidoberfläche des Segments, wobei jedes der Segmente in zwei oder mehr Abschnitte unterteilt ist, so dass n Schichten von Diamantpartikeln (141 a-c, 211 a-c, 121 a-c, 131 a-c) auf einem führenden Abschnitt (211) in einer Schneidrichtung angeordnet sind und n' Schichten von Diamantpartikeln (141d, 141e, 212a-c, 122a-c, 132, 133a) auf einem nachfolgenden Abschnitt (212) in der Schneidrichtung angeordnet sind (wobei n' ≤ n), und wobei die Schichten von Diamantpartikeln auf dem führenden Abschnitt (211) zwischen den Schichten von Diamantpartikeln auf dem nachfolgenden Abschnitt (212) in der Schneidrichtung angeordnet sind, **dadurch gekennzeichnet, dass**
die Schichten von Diamantpartikeln auf dem führenden Abschnitt (211) zwischen den Schichten von Diamantpartikeln auf dem nachfolgenden Abschnitt (212) angeordnet sind durch Bilden von vertieften Bereichen an beiden Seiten des Segments in der Schneidrichtung.

2. Diamantwerkzeug nach Anspruch 1, wobei der Neigungswinkel im Bereich von 5 bis 45° ist.

3. Diamantwerkzeug nach Anspruch 2, wobei der Neigungswinkel im Bereich von 15 bis 45° ist.

4. Diamantwerkzeug nach einem der Ansprüche 1 bis 3, wobei die führenden Schichten von Diamantpartikeln durch einen Abstand voneinander beabstandet sind, der kleiner als oder gleich einer Dicke von jeder nachfolgenden Schicht von Diamantpartikeln ist.

5. Diamantwerkzeug nach einem der Ansprüche 1 bis 3, ferner aufweisend ein oder eine Vielzahl an Segmenten, wobei in jedem die Diamantpartikel darin zufällig verteilt sind.

6. Diamantwerkzeug nach einem der vorhergehenden Ansprüche, wobei jedes der Segmente Füllstoffe (164, 174) hat, die darin in einem Bereich verteilt sind, wo die Schichten von Diamantpartikeln nicht gebildet sind.

7. Diamantwerkzeug nach Anspruch 6, wobei die Füllstoffe ausgewählt sind aus der Gruppe, bestehend aus SiC, WC, BN, Al₂O₃, Diamantpartikeln und Mischungen davon.

8. Diamantwerkzeug nach Anspruch 7, wobei die Füllstoffe die Diamantpartikel sind und die Diamantpartikel, die als die Füllstoffe zu dem Segment hinzugefügt werden, eine Konzentration von 10 bis 60% der Konzentration der Diamantpartikel für den Schneidvorgang in dem Segment haben.

## Revendications

1. Outil diamant comprenant une pluralité de segments (21 ; 22 ; 111, 112 ; 121, 122, 131, 132, 133), chacun des segments ayant une couche unique en forme de plaque ou une pluralité de couches en forme de plaque de particules de diamant agencées sur ce dernier, et les couches de particules de diamant étant agencées sur le segment de sorte que les rainures de coupe formées sur une pièce à usiner par des couches de fuite de particules de diamant sont agencées entre les rainures de coupe formées sur ce dernier par les couches d'attaque de particules de diamant, respectivement pendant une opération de coupe sur la pièce à usiner, et
dans lequel les particules de diamant sont agencées à un angle d'inclinaison prédéterminé par rapport à une ligne raccordant des sommets supérieurs ou une ligne raccordant les sommets inférieurs d'une section transversale, coupée parallèlement à une direction de coupe et perpendiculaire à une surface de coupe, de sorte que les particules de diamant font saillie et sont uniformément espacées les unes des autres sur la surface de coupe du segment pendant l'opération de coupe de la pièce à usiner, dans lequel chacun des segments est divisé en deux ou plusieurs sections de sorte que n couches de particules de diamant (141a-c ; 211a-c ; 121a-c ; 131a-c) sont agencées sur une section d'attaque (211) dans une direction de coupe, et n' couches de particules de diamant (141d, 141e ; 212a-c ; 122a-c, 132, 133a) sont agencées sur une section de fuite (212) dans la direction de coupe (où n' ≤ n), et dans lequel les couches de particules de diamant sur la section d'attaque sont agencées entre les couches de particules de diamant sur la section de fuite (212) respectivement, dans la direction de coupe, **caractérisé en ce que** :
les couches de particules de diamant sur la section d'attaque (211) sont agencées entre les couches de particules de diamant sur la section de fuite (212), respectivement, en formant des parties enfoncées des deux côtés du segment dans la direction de coupe.

2. Outil diamant selon la revendication 1, dans lequel l'angle d'inclinaison est dans la plage de 5 ~ 45°.

3. Outil diamant selon la revendication 2, dans lequel l'angle d'inclinaison est dans la plage de 15 ~ 45°.

4. Outil diamant selon l'une quelconque des revendications 1 à 3, dans lequel les couches d'attaque de particules de diamant sont espacées les unes des autres selon une distance inférieure ou égale à une épaisseur de chaque couche de fuite de particules de diamant.

5. Outil diamant selon l'une quelconque des revendications 1 à 3, comprenant en outre un ou une pluralité de segments, chacun ayant les particules de diamant réparties de manière aléatoire à l'intérieur de ce dernier.

6. Outil diamant selon l'une quelconque des revendications précédentes, dans lequel chacun des segments a des matières de remplissage (164, 174) réparties à l'intérieur de ce dernier au niveau d'une partie où les couches des particules de diamant ne sont pas formées.

7. Outil diamant selon la revendication 6, dans lequel les matières de remplissage sont choisies dans les groupes comprenant SiC, WC, BN, Al₂O₃, des particules de diamant, et leurs mélanges.

8. Outil diamant selon la revendication 7, dans lequel les matières de remplissage sont les particules de diamant, et les particules de diamant ajoutées en tant que matières de remplissage au segment ont une concentration de 10 ~ 60% de la concentration des particules de diamant pour l'opération de coupe dans le segment.
